# EUROPEAN PATENT SPECIFICATION

(11) **EP 4 353 979 B1**
(45) Date of publication and mention of the grant of the patent: **03.09.2025**
(21) Application number: 22201171.0
(22) Date of filing: 12.10.2022
(51) Int. Cl.: F16B 35/06, F16B 25/00

(54) **SCREW CAPABLE OF CUTTING AND RECEIVING DREGS IN DRILLING**
SCHRAUBE ZUM SCHNEIDEN UND AUFNEHMEN VON BODENSATZ BEIM BOHREN
VIS POUVANT COUPER ET RECEVOIR DES DÉPÔTS DANS LE FORAGE

(43) Date of publication of application: 17.04.2024
(73) Proprietor: Fong Prean Industrial Co., Ltd., Kaohsiung City, Taiwan (TW)
(72) Inventor: LIN, TENG-HUNG, Kaohsiung City (CN)
(74) Representative: Treeby, Philip David William

(56) References cited:
- EP-A1- 3 067 575
- EP-A1- 3 855 026
- EP-B1- 3 128 190
- TW-U- M 436 104
- US-A- 2 199 809

## Description

### FIELD OF THE INVENTION

The present invention is related to a screw, and in particular to a screw capable of cutting and receiving dregs in drilling.

### BACKGROUND OF THE INVENTION

The applicant of the present invention provided a screw capable of cutting dregs and compressing dregs in an object to be drilled in a prior patent EP3128190B1. EP3128190B1 provides a screw comprising a tapered head with a tapered neck located between a head portion of the tapered head and a threaded rod of the screw. The tapered neck is provided with a helical knife which winds around a tapered surface of the tapered neck through an angle equal to or larger than 360 degrees. The tapered head can cause that the wood debris or dregs in drillwing are compressed into an object so as to tighten the screw and its tapered head is fixed into the object and no wood dregs is exposed out.

However, EP3128190B1 has many disadvantages that the helical knife cannot fully cut wood material of an object and thus the cutting performance is decreased. The tapered head also lacks space for receiving the wood debris or dregs in cutting and these wood debris or dregs forms a great resistance for drilling of the screw. Therefore, the cutting speed is decreased and the tapered head cannot be easily screwed into the object. The surface around the screwed hole is squeezed and raised because of these wood debris or dregs. As a result, the object cannot have a smooth surface after drilling of the screw.

As a result, there is an eager demand to have a novel structure for improving the disadvantages of above prior art.

EP 3855026 A1 discloses a screw comprising a head and a shank extending from the head and defining a longitudinal axis, with a thread provided on the shank, with the head including a top portion and a first cone portion located between the top portion and the shank and having a peripheral surface, wherein the screw is characterized in that the peripheral surface of the first cone portion is provided with a plurality of recesses spaced from one another in a circumferential direction of the first cone portion, with each of the plurality of recesses including first and second side edges opposite to each other in the circumferential direction and a top edge linking the first and second side edges and adjacent to the top portion, with the first side edge having first recess depths and the second side edge having second recess depths, with a maximum second recess depth being less than a maximum first recess depth of the first side edge, wherein the top edge extends in the circumferential direction of the first cone portion and is partially arranged between the top portion and the first side edge of an adjacent recess along the longitudinal axis.

### SUMMARY OF THE INVENTION

Accordingly, the object of the present invention is to provide a screw capable of cutting and receiving dregs in drilling, wherein advantages of the present invention are that the tapered head cuts an object more completely. The grooves of the tapered head receive the wood debris or dregs in drilling so that the tapered head can drill and be screwed into the object more easily and user can save time and effort on the drilling work. The object also has a smoother surface after the drilling of the screw. As a result, the present invention improves the disadvantage of incomplete cutting, low cutting speed and breaking smoothness of the object by the screw in prior art.

To achieve above object, the present invention provides a screw capable of cutting and receiving dregs in drilling in accordance with claim 1; preferred features are set out in the dependent claims..

### BRIEF DESCRIPTION OF THE DRAWINGS

Fig. 1 is a schematic view of the first embodiment of the present invention.
Fig. 2 is a front side view of the first embodiment of the present invention.
Fig. 3 is a right side view of Fig. 2.
Fig. 4 is a schematic cross view along line A-A of Fig. 2.
Fig. 5 is a front view of the second embodiment of the present invention.
Fig. 6 is a right side view of Fig. 5.
Fig. 7 is a schematic cross view along line B-B of Fig. 5.
Fig. 8 is a schematic view of the third embodiment of the present invention.
Fig. 9 is a schematic view of the fourth embodiment of the present invention.
Fig. 10 is a schematic view of the fifth embodiment of the present invention.
Fig. 11 is a schematic view of the sixth embodiment of the present invention.
Fig. 12 is a schematic view of the seventh embodiment of the present invention.
Fig. 13 is a right side view of Fig. 12.
Fig. 14 is a schematic cross view along line C-C of Fig. 12.
Fig. 15 is a schematic view of the eighth embodiment of the present invention.
Fig. 16 is a front side view of the eighth embodiment of the present invention.
Fig. 17 is a right side view of Fig. 16.
Fig. 18 is a schematic cross view along line D-D of Fig. 16.

### DETAILED DESCRIPTION OF THE INVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

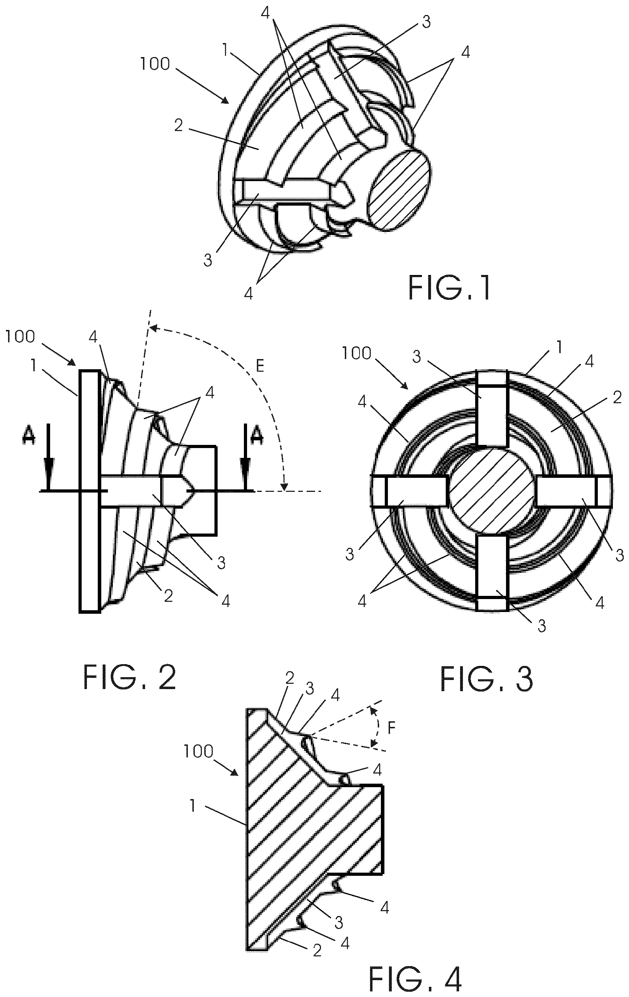

With reference to Figs. 1 to15, the structures of the first to eighth embodiment of the present invention are illustrated. Each of the embodiments comprises a tapered head 100 with a head portion 1 and a tapered neck 2, wherein the tapered neck 2 is provided with at least one strip groove 3 and a plurality of knives 4. The knives 4 are arranged along a helical path or a plurality of concentric circular paths. The knives 4 provide sharp edges for easily cutting wood fiber of an object and the at least one strip groove 3 provides adequate space for receiving wood debris or dregs of the object in drilling of the screw. Therefore, user can save effort on the work of drilling the tapered head 100 into the object and the object also will have a smoother surface after the drilling.

With reference to Figs. 1 to 4, the first embodiment of the present invention is illustrated. The first embodiment of the present invention comprises the following elements.

A tapered head 100 with a head portion 1 and a tapered neck 2. The tapered neck 2 is located at a lower end of the head portion 1. The tapered neck 2 has a larger upper end and a small lower end.

At least one strip groove 3 is formed on a tapered surface of the tapered neck 2. The least one strip groove 3 and the tapered neck 2 are integrally formed. An upper end of each said strip groove 3 is located at the lower end of the head portion 1; that is, the upper end of each said strip groove 3 is located at the upper end of the tapered neck 2. Each said strip groove 3 extends downward along the tapered surface of the tapered neck 2.

A plurality of knives 4 are formed on the tapered surface of the tapered neck 2 and wind around the tapered surface of the tapered neck 2. Each of the knives 4 is located at an outer side of each said strip groove 3, respectively. The knives 4 and the tapered neck 2 are integrally formed and the knives 4 protrude from the tapered surface of the tapered neck 2. An angle E between each of the knives 4 and a center axis of the tapered head 100 is not a right angle. An angle F between two sides of a sharp bottom end 41 of each of the knives 4 is between 30 to 45 degrees. The knives 4 are arranged along a helical path.

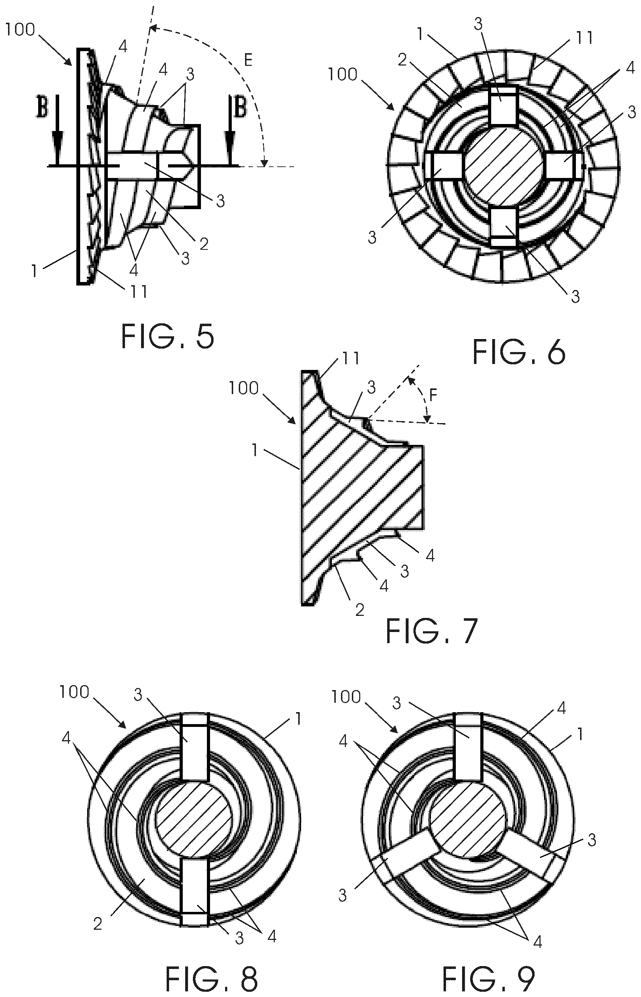

With reference to Figs. 5 to 7, the second embodiment of the present invention is illustrated. In this embodiment, those elements (including the angles E and F) identical to those in the first embodiment are illustrated by the same numerals and they have the same functions and effects. Therefore, the details will not be further described herein. Only the difference therebetween are described herein.

In the second embodiment, a ring tooth portion 11 is formed between an outer edge of the lower end of the head portion 1 and the larger upper end of the tapered neck 2. The ring tooth portion 11 is formed by a plurality of teeth 111. The ring tooth portion 11 surrounds an outer side of the larger upper end of the tapered neck 2.

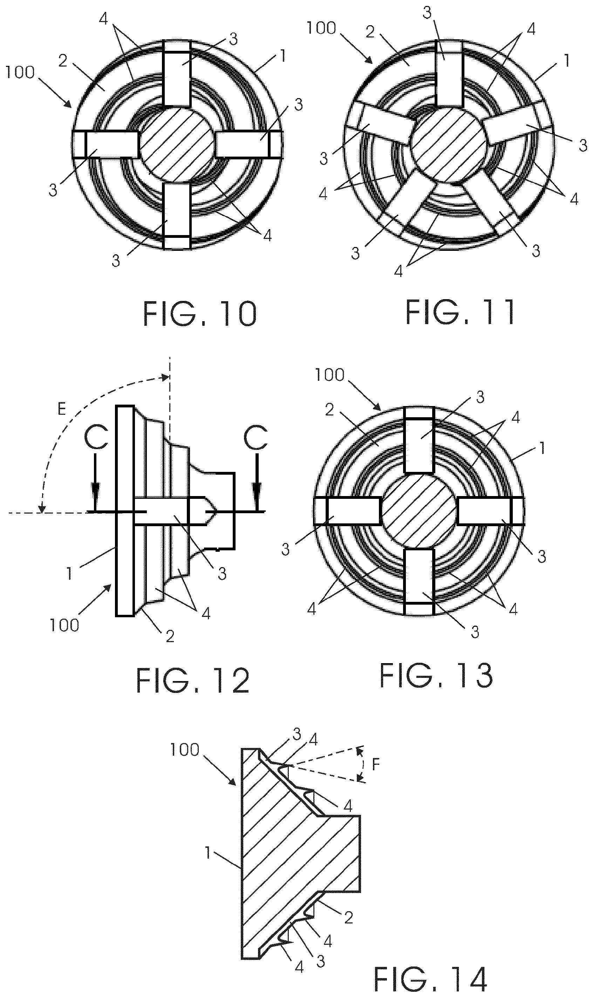

Figs 8 to 11 show the third, fourth, fifth and sixth embodiment of the present invention. In these embodiment, there can be more than one strip groove 3 provided in the tapered neck 2. In the Fig. 8 showing the third embodiment of the present invention, there are two strip grooves 3 formed on the tapered neck 2. In the Fig. 9 showing the fourth embodiment of the present invention, there are three strip grooves 3 formed on the tapered neck 2. In the Fig. 10 showing the fifth embodiment of the present invention, there are four strip grooves 3 formed on the tapered neck 2. In the Fig. 11 showing the sixth embodiment of the present invention, there are five strip grooves 3 formed on the tapered neck 2.

With reference to Figs. 12 to 14, the seventh embodiment of the present invention is illustrated. In this embodiment, those elements identical (including the angle F) to those in the first embodiment are illustrated by the same numerals and they have the same functions and effects. Therefore, the details will not be further described herein. Only the difference therebetween are described herein.

In the seventh embodiment, each of the knives 4 extends horizontally along the tapered surface of the tapered neck 2. That is, an angle E between each of the knives 4 and a center axis of the tapered head 100 is a right angle. The knives 4 are arranged along a plurality of concentric circular paths.

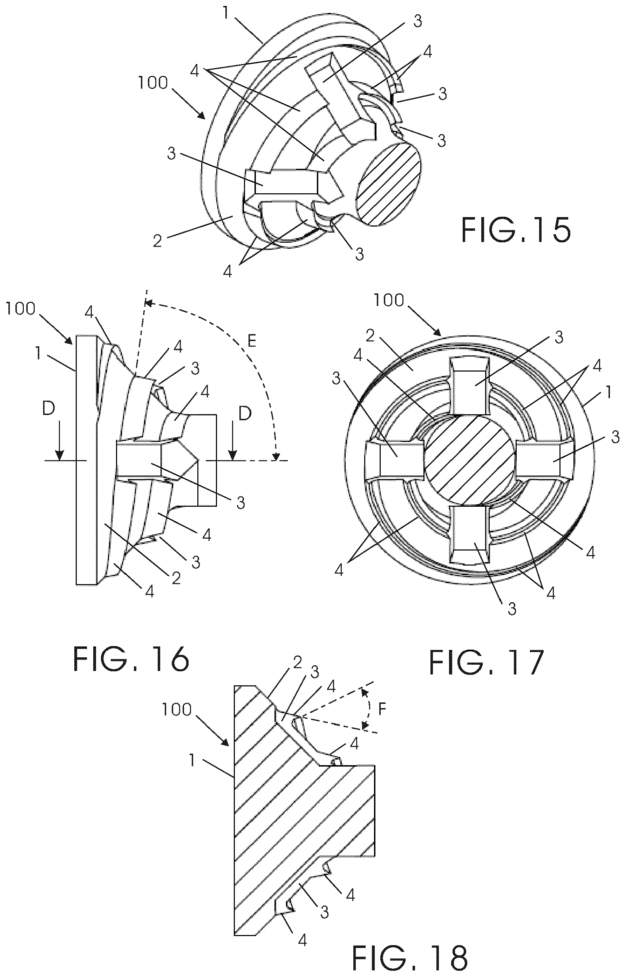

With reference to Figs. 15 to 18, the eighth embodiment of the present invention is illustrated. In this embodiment, those elements (including the angles E and F) identical to those in the first embodiment are illustrated by the same numerals and they have the same functions and effects. Therefore, the details will not be further described herein. Only the difference therebetween are described herein.

In the eighth embodiment, there is a predetermined distance between the upper end of each said strip groove 3 and the lower end of the head portion 1. That is, the upper end of each said strip groove 3 is lower than the lower end of the head portion 1.

Advantages of the present invention are that the tapered head cuts an object more completely. The grooves of the tapered head receive the wood debris or dregs in drilling so that the tapered head can drill and be screwed into the object more easily and user can save time and effort on the drilling work. The object also has a smoother surface after the drilling of the screw. As a result, the present invention improves the disadvantage of incomplete cutting, low cutting speed and breaking smoothness of the object by the screw in prior art.

## Claims

1. A screw capable of cutting and receiving dregs in drilling comprising:
a tapered head (100) with a head portion (1) and a tapered neck (2); the tapered neck (2) being located at a lower end of the head portion (1); the tapered neck (2) having a larger upper end and a small lower end;
at least two strip grooves (3) formed on a tapered surface of the tapered neck (2); and
a plurality of knives (4) formed on the tapered surface of the tapered neck (2); the knives (4), the strip grooves (3) and the tapered neck (2) being integrally formed;
**characterized in that**: the knives (4) protrude from the tapered surface of the tapered neck (2); each of the strip grooves (3) extends downward along the tapered surface of the tapered neck (2) whereas the knives (4) wind around the tapered surface of the tapered neck (2), each knife being located at an outer side of each of the strip grooves (3).

2. The screw capable of cutting and receiving dregs in drilling as claimed in claim 1, wherein an angle between each of the knives (4) and a center axis of the tapered head (100) is not a right angle.

3. The screw capable of cutting and receiving dregs in drilling as claimed in claim 1, wherein each of the knives (4) extends horizontally along the tapered surface of the tapered neck (2); that is, an angle between each of the knives (4) and a center axis of the tapered head (100) is a right angle.

4. The screw capable of cutting and receiving dregs in drilling as claimed in claim 1, wherein an angle between two sides of a sharp bottom end of each of the knives (4) is between 30 to 45 degrees.

5. The screw capable of cutting and receiving dregs in drilling as claimed in claim 1, wherein an upper end of each said strip groove (3) is located at the lower end of the head portion (1); that is, the upper end of each said strip groove (3) is located at the upper end of the tapered neck (2).

6. The screw capable of cutting and receiving dregs in drilling as claimed in claim 1, wherein there is a predetermined distance between an upper end of each said strip groove (3) and the lower end of the head portion (1); that is, the upper end of each said strip groove (3) is lower than the lower end of the head portion(1).

7. The screw capable of cutting and receiving dregs in drilling as claimed in claim 1, further comprising a ring tooth portion (11) formed between an outer edge of the lower end of the head portion (1) and the larger upper end of the tapered neck (2); the ring tooth portion (11) being formed by a plurality of teeth (111); and the ring tooth portion (11) surrounding an outer side of the larger upper end of the tapered neck (2).

8. The screw capable of cutting and receiving dregs in drilling as claimed in claim 1, wherein the knives (4) are arranged along a helical path.

9. The screw capable of cutting and receiving dregs in drilling as claimed in claim 1, wherein the knives (4) are arranged along a plurality of concentric circular paths.

## Patentansprüche

1. Schraube, geeignet zum Schneiden und Aufnehmen von Verunreinigungen beim Bohren, umfassend:
einen abgeschrägten Kopf (100) mit einem Kopfabschnitt (1) und einem abgeschrägten Hals (2), wobei sich der abgeschrägte Hals (2) an einem unteren Ende des Kopfabschnitts (1) befindet, wobei der abgeschrägte Hals (2) ein größeres oberes Ende und ein kleines unters Ende aufweist,
mindestens zwei Abtragerillen (3), die an einer abgeschrägten Fläche des abgeschrägten Halses (2) gebildet sind, und
mehrere Messer (4), die an der abgeschrägten Fläche des abgeschrägten Halses (2) gebildet sind, wobei die Messer (4), die Abtragerillen (3) und der abgeschrägte Hals (2) einstückig gebildet sind,
**dadurch gekennzeichnet, dass**: die Messer (4) aus der abgeschrägten Fläche des abgeschrägten Halses (2) hervorstehen, sich jede der Abtragerillen (3) entlang der abgeschrägten Fläche des abgeschrägten Halses (2) abwärts erstreckt, wohingegen sich die Messer (4) um die abgeschrägte Fläche des abgeschrägten Halses (2) winden, wobei sich jedes Messer an einer Außenseite von jeder der Abtragerillen (3) befindet.

2. Schraube, geeignet zum Schneiden und Aufnehmen von Verunreinigungen beim Bohren, nach Anspruch 1, wobei ein Winkel zwischen jedem der Messer (4) und einer Mittelachse des abgeschrägten Kopfs (100) kein rechter Winkel ist.

3. Schraube, geeignet zum Schneiden und Aufnehmen von Verunreinigungen beim Bohren, nach Anspruch 1, wobei sich jedes der Messer (4) horizontal entlang der abgeschrägten Fläche des abgeschrägten Halses (2) erstreckt, das heißt, ein Winkel zwischen jedem der Messer (4) und einer Mittelachse des abgeschrägten Kopfs (100) ein rechter Winkel ist.

4. Schraube, geeignet zum Schneiden und Aufnehmen von Verunreinigungen beim Bohren, nach Anspruch 1, wobei ein Winkel zwischen zwei Seiten eines scharfen unteren Endes von jedem der Messer (4) zwischen 30 bis 45 Grad beträgt.

5. Schraube, geeignet zum Schneiden und Aufnehmen von Verunreinigungen beim Bohren, nach Anspruch 1, wobei sich ein oberes Ende jeder Abtragerille (3) an dem unteren Ende des Kopfabschnitts (1) befindet, das heißt, das obere Ende jeder Abtragerille (3) sich an dem oberen Ende des abgeschrägten Halses (2) befindet.

6. Schraube, geeignet zum Schneiden und Aufnehmen von Verunreinigungen beim Bohren, nach Anspruch 1, wobei zwischen einem oberen Ende jeder Abtragerille (3) und dem unteren Ende des Kopfabschnitts (1) ein festgelegter Abstand besteht, das heißt, das obere Ende jeder Abtragerille (3) tiefer liegt als das untere Ende des Kopfabschnitts (1).

7. Schraube, geeignet zum Schneiden und Aufnehmen von Verunreinigungen beim Bohren, nach Anspruch 1, ferner umfassend einen ringförmigen gezahnten Abschnitt (11), der zwischen einer Außenkante des unteren Endes des Kopfabschnitts (1) und dem größeren oberen Ende des abgeschrägten Halses (2) gebildet ist, wobei der ringförmige gezahnte Abschnitt (11) durch mehreren Zähne (111) gebildet ist und der ringförmige gezahnte Abschnitt (11) eine Außenseite des größeren oberen Endes des abgeschrägten Halses (2) umgibt.

8. Schraube, geeignet zum Schneiden und Aufnehmen von Verunreinigungen beim Bohren, nach Anspruch 1, wobei die Messer (4) auf einer spiralförmigen Bahn angeordnet sind.

9. Schraube, geeignet zum Schneiden und Aufnehmen von Verunreinigungen beim Bohren, nach Anspruch 1, wobei die Messer (4) entlang mehrerer konzentrischer kreisförmiger Bahnen angeordnet sind.

## Revendications

1. Vis en mesure de découper et de recevoir des dépôts en cours de forage comportant :
une tête conique (100) avec une partie formant tête (1) et un collet conique (2) ; le collet conique (2) étant situé au niveau d'une extrémité inférieure de la partie formant tête (1) ; le collet conique (2) ayant une extrémité supérieure de plus grande taille et une extrémité inférieure de petite taille ;
au moins deux rainures de bande (3) formées sur une surface conique du collet conique (2) ; et
une pluralité de couteaux (4) formés sur la surface conique du collet conique (2) ; les couteaux (4), les rainures de bande (3) et le collet conique (2) étant formés d'un seul tenant ;
**caractérisée en ce que** : les couteaux (4) dépassent de la surface conique du collet conique (2) ; chacune des rainures de bande (3) s'étend vers le bas le long de la surface conique du collet conique (2) tandis que les couteaux (4) s'enroulent autour de la surface conique du collet conique (2), chaque couteau étant situé au niveau d'un côté extérieur de chacune des rainures de bande (3).

2. Vis en mesure de découper et de recevoir des dépôts en cours de forage selon la revendication 1, dans laquelle un angle entre chacun des couteaux (4) et un axe central de la tête conique (100) n'est pas un angle droit.

3. Vis en mesure de découper et de recevoir des dépôts en cours de forage selon la revendication 1, dans laquelle chacun des couteaux (4) s'étend à l'horizontale le long de la surface conique du collet conique (2) ; c'est-à-dire qu'un angle entre chacun des couteaux (4) et un axe central de la tête conique (100) est un angle droit.

4. Vis en mesure de découper et de recevoir des dépôts en cours de forage selon la revendication 1, dans laquelle un angle entre deux côtés d'une extrémité inférieure aiguisée de chacun des couteaux (4) est compris entre 30 à 45 degrés.

5. Vis en mesure de découper et de recevoir des dépôts en cours de forage selon la revendication 1, dans laquelle une extrémité supérieure de chaque dite rainure de bande (3) est située à l'extrémité inférieure de la partie formant tête (1) ; c'est-à-dire que l'extrémité supérieure de chaque dite rainure de bande (3) est située à l'extrémité supérieure du collet conique (2).

6. Vis en mesure de découper et de recevoir des dépôts en cours de forage selon la revendication 1, dans laquelle il existe une distance prédéterminée entre une extrémité supérieure de chaque dite rainure de bande (3) et l'extrémité inférieure de la partie formant tête (1) ; c'est-à-dire que l'extrémité supérieure de chaque dite rainure de bande (3) est plus basse que l'extrémité inférieure de la partie formant tête (1).

7. Vis en mesure de découper et de recevoir des dépôts en cours de forage selon la revendication 1, comportant par ailleurs une partie dentée annulaire (11) formée entre un bord extérieur de l'extrémité inférieure de la partie formant tête (1) et l'extrémité supérieure de plus grande taille du collet conique (2) ; la partie dentée annulaire (11) étant formée par une pluralité de dents (111) ; et la partie dentée annulaire (11) entourant un côté extérieur de l'extrémité supérieure de plus grande taille du collet conique (2).

8. Vis en mesure de découper et de recevoir des dépôts en cours de forage selon la revendication 1, dans laquelle les couteaux (4) sont agencés le long d'un trajet hélicoïdal.

9. Vis en mesure de découper et de recevoir des dépôts en cours de forage selon la revendication 1, dans laquelle les couteaux (4) sont agencés le long d'une pluralité de trajets circulaires concentriques.
